# EUROPEAN PATENT SPECIFICATION

(11) **EP 4 417 759 B1**
(45) Date of publication and mention of the grant of the patent: **08.04.2026**
(21) Application number: 24157670.1
(22) Date of filing: 14.02.2024
(51) Int. Cl.: E04D 3/40, E04C 2/292, E04B 2/02, E04D 3/35, E04D 3/36, E04D 3/362

(54) **SANDWICH PANEL FOR CLADDING OR COVERING ROOFS OR FOR THE CONSTRUCTION OF WALLS AS WELL AS A METHOD FOR OBTAINING THE SAME**
SANDWICHPLATTE ZUR VERKLEIDUNG ODER ABDECKUNG VON DÄCHERN ODER ZUR KONSTRUKTION VON WÄNDEN SOWIE VERFAHREN ZUR HERSTELLUNG DAVON
PANNEAU SANDWICH POUR LE REVÊTEMENT OU LE REVÊTEMENT DE TOITS OU POUR LA CONSTRUCTION DE MURS AINSI QUE PROCÉDÉ POUR L'OBTENIR

(30) Priority: 15.02.2023 IT 202300002610
(43) Date of publication of application: 21.08.2024
(62) Divisional of application: 24207018.3
(73) Proprietor: Isopan S.p.A., 37135 Verona (IT)
(72) Inventor: GUERRINI, Luigi, 37135 Verona (IT)
(74) Representative: Feltrinelli, Secondo Andrea

(56) References cited:
- EP-B1- 1 417 443
- WO-A1-2015/118588
- DE-C2- 2 754 814
- DE-U- 7 424 858
- US-A- 5 870 868

## Description

### TECHNICAL FIELD OF THE INVENTION

The present invention concerns a new sandwich panel for cladding or covering roofs or for obtaining walls, as well as a method for obtaining the same.

### STATE OF THE PRIOR ART

For obtaining buildings or constructions in general with a particular aesthetic, solutions have been proposed that use so-called "sandwich" panels, i.e. panels with an intermediate layer made of insulating material and two metal sheets each applied on a main face of the intermediate layer.

Adjacent panels are joined together by engaging respective male or female portions defined by the sides of the panels themselves.

The panels proposed so far have some drawbacks.

First of all, having a panel with a given format or even some formats available, it is not always easy to complete a roof or a facade, since it may happen that the last space or area to be filled with a panel has dimensions different from the formats at disposal.

Furthermore, with the solutions on the market it is very difficult to reverse the installation sequence, a condition which may be necessary in particular in the case of redevelopment operations.

Document WO 2015/118588 A1, DE2754814C2 and DE7424858U disclose a sandwich panel suitable for cladding or covering roofs or for the construction of walls, with an insulating layer covered by two face sheets, including a profile attached to a lateral face forming part of a connection to a further panel.

### OBJECTS OF THE INVENTION

An object of the present invention is to provide a new sandwich panel for cladding or covering roofs or for obtaining walls.

Another object of the present invention is to provide a panel as mentioned above which allows to obtain an optimal adaptation for the on-site completion of facades or roofs thanks, in particular, to the specific dimensions.

Another object of the present invention is to provide a panel as indicated above which ensures the possibility to vary the installation sequence, in particular for energy redevelopment operations on existing buildings.

A further object of the present invention is to provide a panel as previously mentioned which ensures an effective thermal break in association with a satisfactory mechanical seal when installed and coupled to other panels.

Another object of the present invention is to provide such a panel which can be used in combination with panels having any type of interlocking or constraint means.

Another object of the present invention is to provide a method for obtaining a panel as above indicated.

In accordance with one aspect of the invention, a panel according to claim 1 is provided.

In accordance with another aspect of the invention, a method according to claim 17 is provided.

The dependent claims refer to preferred and advantageous embodiments of the invention.

### BRIEF DESCRIPTION OF THE DRAWINGS

Other characteristics and advantages of the invention will be more evident from the description of embodiments of panel, method and machine, illustrated for indicative purposes in the attached drawings in which:
- figure 1 is a side view of a detail of a panel according to the present invention,
- figure 2 is an exploded view of the components of the panel of figure 1,
- figure 3 shows the engagement or interlocking of the panel of figure 1 with another panel,
- figures 4 to 6 are views similar, respectively, to figures 1 to 3 with reference to another embodiment of panel in accordance with the present invention,
- figures 7a-7e illustrate the steps of a method according to the present invention,
- figures 8a-8g show the steps of another method according to the present invention,
- figures 9 and 10 show panels obtainable through the method of figures 7 and 8, respectively,

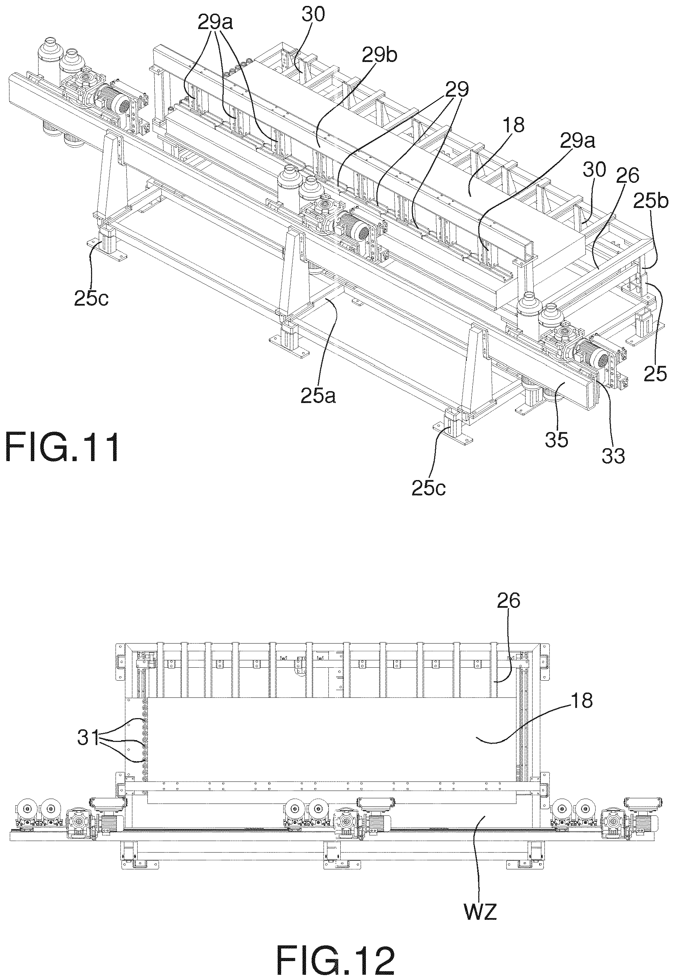

- figures 11 and 12 are, respectively, a perspective view and a top view of a machine according to the present invention during the processing steps of a panel,

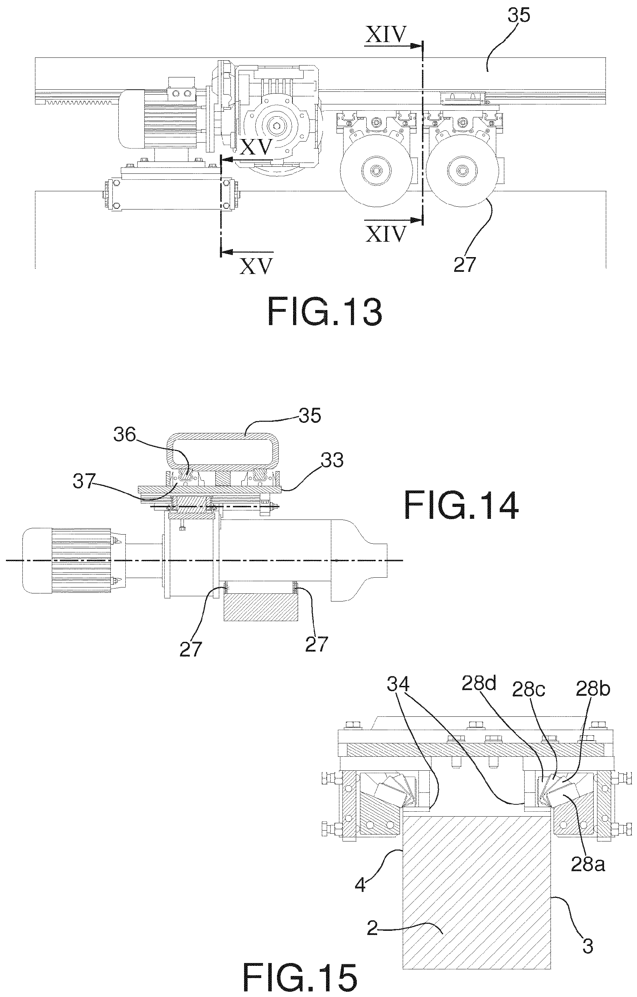

- figure 13 shows a detail on an enlarged scale of the machine of figures 11 and 12, and
- figures 14 and 15 are cross-section views along the lines XIV-XIV and XV-XV, respectively, of figure 13.

In the attached drawings, identical parts or components are identified by the same reference numbers.

### EMBODIMENTS OF THE INVENTION

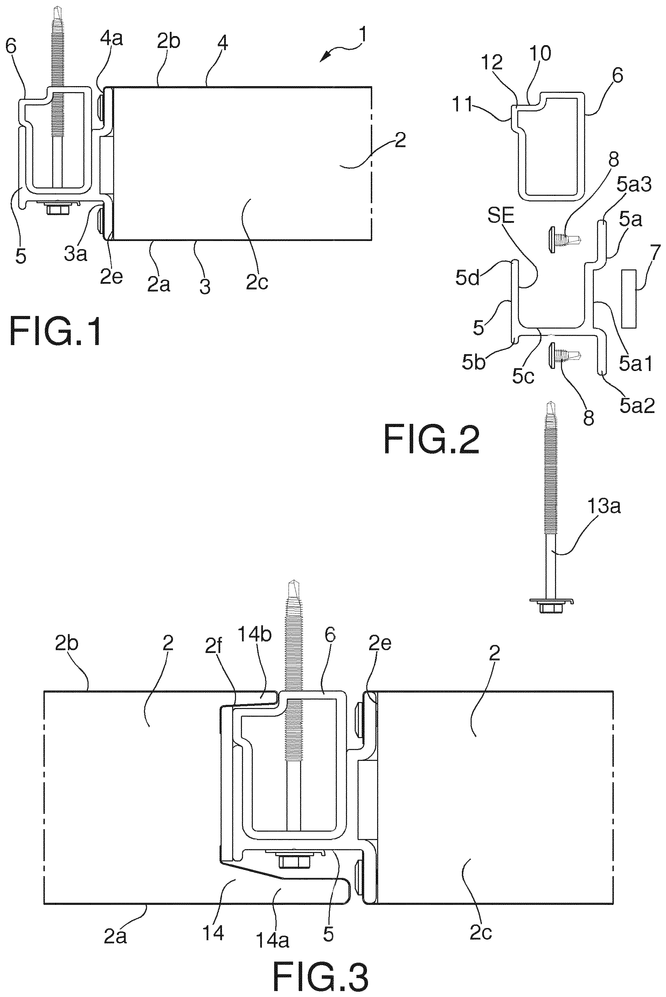

With reference first to figures 1 to 3, a sandwich panel 1 for cladding or covering roofs or for obtaining walls according to the present invention has been illustrated.

The panel 1 comprises at least one first main layer or block 2 of support or insulation, which includes two main extension faces 2a, 2b parallel to each other, and lower extension edge faces including a front face 2c, a rear face 2d parallel to the front face as well as two lateral faces 2e, 2f.

The first main layer or block 2 of support or insulation can be for example made of mineral wool, expanded polyurethane or glass wool.

Furthermore, the first main layer or block 2 of support or insulation preferably has a constant or variable thickness, for example with raised zones alternating with recessed zones.

The panel 1 is then provided with at least one first sheet 3, if desired metallic or not, applied or adhered to a first face 2a of main extension of the first main support layer 2 as well as at least one second sheet 4 applied or adhered to the other or second face 2b of main extension of the first main support layer 2.

The sheets 3, 4 can be made of any suitable material, for example steel, if desired galvanized, pre-painted, stainless steel, or pre-painted or natural aluminium, copper, or even non-metallic material, such as a polymeric material or composite material or a material of other type.

The sheets 3, 4 can be substantially flat, but also with slats, microribs or corrugated or with another shape.

At least one (but if desired both) sheet metal 3, 4 is adhered, glued or bound in another way, for example by means of adhesive, to one of the main faces 2a, 2b of the first main layer or block 2.

Furthermore, in particular if this layer or block 2 is made of mineral wool or glass wool, an internal face of the sheets 3, 4 is preferably constrained, for example glued, throughout its entire extension in a substantially uniform manner to a main face 2a, 2b of the layer or block 2. If the layer or block 2 is made of expanded polyurethane or another expandable component, then the bond between it and the sheets 3, 4 could be obtained by adhesion following the expansion of the polyurethane or expandable component close to this sheet metal before the final hardening or solidification of the polyurethane or expandable component.

Furthermore, the panel 2 includes at least one profile 5, 6 constrained to one or at a lateral face 2e, 2f, flat or not, of the first layer 2 so as to constitute a male portion of constraint or connection or engagement of the sandwich panel 1 with a female portion of an adjacent sandwich panel, the latter being according to the present invention or even different, for example a standard panel.

Preferably, the profile 5 and/or 6 extends for all or substantially all or at least 60%, 70%, 80 or 90% of the extension of the respective lateral face 2e, and thus from the front face 2c to the rear face of the first layer 2. Of course, several profiles 5, 6 can be provided aligned one after the other or even at a distance along the extension of the same lateral face 2e so as to cover or extend for at least 60%, 70%, 80% or 90% of the extension of the respective lateral face 2e.

With regard to this aspect, the profile 5, 6 is preferably designed to ensure the thermal break between adjacent panels.

Advantageously, the at least one profile includes a first profile 5 with a base section 5a fastened to the first layer 2 as well as a cantilever section 5b.

The base section 5a may be flat or not. Thus for example, the base section 5a could have an intermediate portion 5a1 raised with respect to its end portions 5a2, 5a3, so that the base section 5a abuts against the first layer 2 only at its end portions 5a2, 5a3, while between the first layer 2 and the intermediate portion 5a1 of the base section 5a a cavity or recess is delimited, if desired, in which a spacer or filling 7 can be housed.

If desired, the cantilever section 5b includes a first wall 5c rising, in an inclined or orthogonal manner, from the base section 5a in the direction away from the first layer 2 and a second wall 5d rising from the first wall 5c with an arrangement inclined or orthogonal with respect to the latter and at a distance, if desired equal to approximately 20-80 mm, if desired 30-60 mm, for example 40-50 mm from the base section 5a. The second wall 5d can have any suitable extension, for example between 20 and 80 mm, if desired between 30 and 60 mm or between 40 and 50 mm.

According to the non-limiting embodiment illustrated in the figures, the cantilever section 5b extends from an intermediate position of the base section 5a, for example starting from a position between half and an end of the base section 5a, so as to divide the latter into two parts, a first main part 5a1, 5a2 and the other or second minor part 5a3 each extending between one end of the base section 5a and the position from which the cantilever section 5b departs.

A seat SE, if desired a U-shaped seat is defined between the second wall 5d of the cantilever section 5b and the base section 5a and, more particularly, between the second wall 5d of the cantilever section 5b and a part 5a1, 5a2 of the base section, wherein an intermediate section of the U is defined by the first wall 5c, while the two terminal sections of the U are constituted by the second wall 5d and a part 5a1, 5a2 of the base section 5a.

With regard to this aspect, the extension of the second wall 5d may be less than the extension of the part 5a1, 5a2 of the base section 5a.

The first profile 5 preferably has a constant thickness, for example between 0.5 and 10 mm, preferably between 1 and 8 mm or between 2 and 6 mm or between 2 and 4 mm.

Advantageously, the first profile 5 is made in one piece.

Preferably, the panel 1 includes means for clamping or constraining 8 the profile 5 to the sheets 3, 4 and, if desired, to the first layer 2, such as for example one or more screws, bolts and/or rivets.

Even more preferably, the first 3 and the second 4 sheet have a section 3a, 4a protruding laterally with respect to the first layer 2, which section 3a, 4a is folded on or towards the first layer 2 at the lateral face 2e of constraint of the at least one profile 5, 6. The protruding section 3a, 4a preferably has an extension between 1 and 30 mm, if desired between 5 and 20 mm or between 10 and 15 mm.

According to this non-limiting variant, the ends of the profile 5 are clamped or constrained by means of the clamping or constraint means 8 to the protruding sections 3a, 4a of the first 3 and second 4 sheet, for example between the protruding sections 3a, 4a of the first 3 and second 4 sheet and the respective lateral face 2e of the first layer or block 2.

The clamping or constraint means 8 clearly perform the function of mechanical constraint of the profile 5 to the sheets 3, 4 and, if desired, to the first layer or block 2.

Advantageously, the at least one profile even includes at least one second profile 6 connected to the first profile 5 and defining with it a male portion of constraint or connection or engagement of the panel 1 to a female portion of panels, in use, adjacent and brought close to it.

If desired, the second profile 6 is housed, for example substantially to size or with little slack, a few mm (for example between 0.1 and 5) within the seat SE defined between the second wall 5d of the cantilever section 5b and the base section 5a.

According to the non-limiting embodiment illustrated in the figures, the second profile 6 has a tubular configuration with a regular or irregular section.

If desired, the second profile 6 has a substantially rectangular configuration for three edges, but the fourth edge defined with 90° sides is not provided, and instead of it a recess 10 is present obtained on one side and a protrusion 11 on the other side adjacent and subsequent, so as to define a fourth irregular vertex or edge zone 12 of the second profile 6.

The second profile 6 is placed in the seat SE so that the fourth vertex 12 is outside the seat SE and distal from the base section 5a, if desired with the projection 11 abutting on the free end of the second wall 5d.

Furthermore, once the second profile 6 has been inserted, the wall of the protrusion 11 distal from the first layer 2 may or may not be substantially aligned with the second wall 5d.

The second profile 6 preferably has a constant thickness, for example between 0.5 and 10 mm, if desired between 1 and 8 mm or between 2 and 6 mm or between 2 and 4 mm.

Advantageously, the second profile 6 is in one piece.

If desired, the panel 1 even includes connection means to a substructure, such as one or more screws 13a or the like passing through the profile 5 and/or the two profiles 5, 6, if provided. In this regard, one or more screws 13a can be provided extending in a direction parallel to the direction from one main extension face 2a to the other 2b and/or one or more screws extending in a direction orthogonal to the direction from a main extension face 2a to the other 2b and/or also one or more screws extending in other directions.

According to a variant, the lateral face 2f of the first main layer or block 2 which is distal from the profile 5, 6, if desired together with end portions of the sheets 3 and/or 4, defines a male portion of constraint or connection or engagement.

According to another variant, the lateral face 2f of the first main layer or block 2 which is distal from the profile 5, 6, if desired together with end portions of the sheets 3 and/or 4, defines a female portion of constraint or connection or engagement with configuration substantially complementary to the profile 5, 6.

If desired, the panel 1 includes two profiles or two series of profiles 5, 6, one constrained or connected on one lateral face 2e and the other constrained or connected on the other lateral face 2f.

The profile 5 is, preferably, made of a material selected from the group consisting of polymer or polymeric material, for example ABS, PVC, Nylon, methacrylate, pultruded fiberglass, composite polymers in general, or similar materials such as to avoid the thermal bridge. The profile 6, if provided, can be made of any suitable material, such as metal, for example aluminium, if desired extruded, steel, for example press-bent or rolled, or of fiberglass, polymer or the like materials.

Subject-matter of the present invention is even a façade or roof comprising at least one first panel 1 and at least another or second sandwich panel, if desired a panel 1, wherein the male constraint or connection portion made by the profile 5, 6 is inserted and constrained in a female portion 14 of the other sandwich panel, so that the sole contact element of the first panel with the other or second panel consists of the at least one profile 5, 6.

With reference to such an aspect, a female portion 14 can include for example a U- or C-shaped configuration, if desired with the two cantilevered lateral section 14a, 14b with equal or different dimensions, one 14a greater and the other 14b lower.

In this case, part of the profiles 5, 6 and more in particular the cantilever section 5b of the first profile 5 and part of the second profile 6 distal from the first layer 2 of the respective panel 1, could be housed in the seat of the U- or C-shaped section of the female portion 14, if desired with the fourth vertex or edge zone 12 abutting, at the recess 10, against a lateral or cantilever section 14b.

A cantilevered lateral section 14a of the female portion 14 of a first panel could then be such as to conceal or hide on the outside a connection screw 13a to a substructure of a second panel with its male portion in engagement with the female portion of the first panel. In this case, the screw 13a extends in a direction parallel to the direction from one main extension face 2a to the other 2b.

The male and female connection of the standard panels is essentially regenerated using the profiles 5, 6, but with a new male portion.

Of course, the facade or roof preferably comprises a plurality of panels, all or some made according to the present invention.

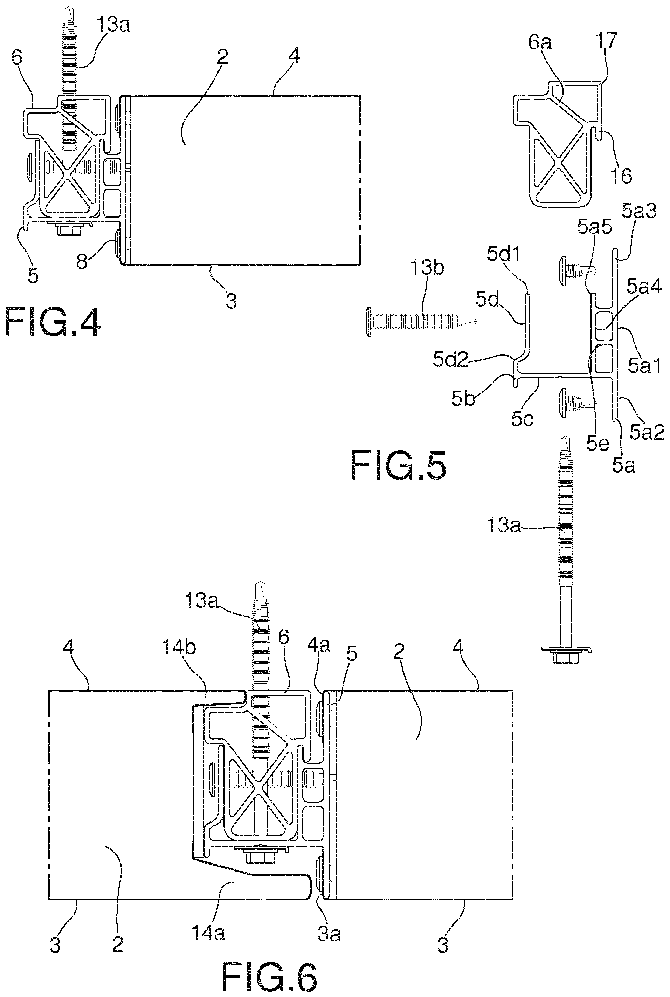

With reference to figures 4 to 6, another embodiment of panel in accordance with the present invention has been shown, similar to that of figures 1 to 3, but in which the intermediate portion 5a1 of the base section 5a is not raised, but it is made integral with a second plate 5a4 with dimensions smaller than the base section 5a with stiffening sections 5e between the second plate 5a4 and the intermediate portion 5a1. In this case, the second plate 5a4 can have a free engaging end 5a5 which will be discussed later.

Always according to this embodiment, the second wall 5d is folded so as to present a free end part 5d1 closer to the base section 5a than the union or continuation part 5d2 with the first wall 5c. If desired, the free end part 5d1 is substantially parallel to the base section 2a or to the second plate 5a4.

As regards the second profile 6, it defines a coupling section 16 at the vertex or edge zone 17 proximal to the first layer 2 and distal from the first wall 5c. More specifically, the coupling section 16 is configured as a hook or grapple and is designed to engage or hook at the free end 5a5 of the second plate 5a4.

If desired, the second profile 6 has also intermediate walls 6a designed to strengthen the tubular structure of this profile.

According to the embodiment now under consideration, the panel 1 includes one or more screws 13a extending in a direction parallel to the direction from one main extension face 2a to the other 2b and/or one or more screws 13b extending in a direction orthogonal to the direction from one main extension face 2a to the other 2b.

With specific reference to the screw 13b (for the 13a applies what previously mentioned), it is a functional screw designed to make the two profiles 15, 6 integral with each other. This screw 13b crosses respective portions of the profiles 5, 6, for example the base section 5a and the second wall 5d of the first profile 5 and the main body of the second profile 6.

A method according to the present invention for obtaining a panel according to the present invention comprises the following steps:
- obtaining, by means of known processes, a sandwich panel with the first layer or main block 2 of support or insulation and two sheets 3, 4 each applied on a main extension face 2a, 2b of the first main layer or block 2,
- constraining the at least one profile 5, 6 to the first 3 and/or second 4 layer and/or on a lateral face 2e of the first layer 2 by means of the one or more screws, bolts and/or rivets 8.

If desired, the constraining step comprises the following sub-steps:
- remove part of the first layer 2 at one side, so as to obtain that the first 3 and second sheet 4 have a section 3a, 4a protruding laterally with respect to the first block 2,
- bend the protruding portions 3a, 4a towards the lateral face 2e of constraint of the at least one profile 5, 6,
- arrange the profile 5, in particular the base section 5a thereof, close to the lateral face 2e of the first layer 2 between the protruding portions 3a, 4a and the lateral face 2e of the first layer 2, and
- apply the clamping or constraining means 8, so that ends or portions 5a2, 5a3 of the at least one profile 5, for example the end portions 5a2, 5a3 of the base section 5a, are clamped or constrained by the means for clamping or constraining 8 to the protruding section 3a, 4a of the first 3 and second 4 sheet, for example between the protruding sections 3a, 4a of said first 3 and second 4 sheet and the respective lateral face 2e of the first block 2.

Clearly, the arrangement step of the profile 5 could be carried out before bending the protruding sections 3a, 4a, but in any case in such a way that after bending respective portions of the profile 5 are between the protruding sections 3a, 4a and the lateral face 2e of the first layer.

If two profiles 5 and 6 as described above are provided, the second profile 6 can be inserted into the seat SE before or after the first profile 5 has been constrained as now described.

Of course, the constraint or connection of the profile to the other elements 2, 3, 4 of the panel can be obtained in a different way from what has now been described.

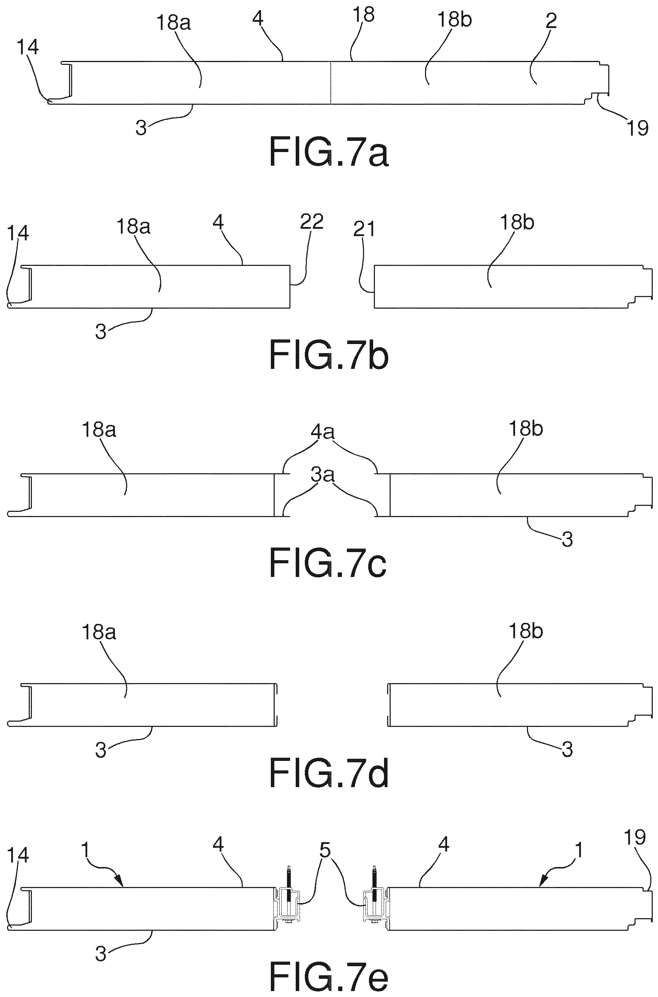

With reference to figures 7a-7e, they illustrate the steps of a method according to the present invention, which envisages, starting from a standard sandwich panel 18 (figure 7a), then one with a male portion 19 at one side or flank and a female portion 14 at the other side or flank, to apply a cut (figure 7b) at an intermediate portion or half of the panel and in a plane where the direction from a main extension face 2a to the other 2b and the direction from the front face 2c to the back face 2d lies.

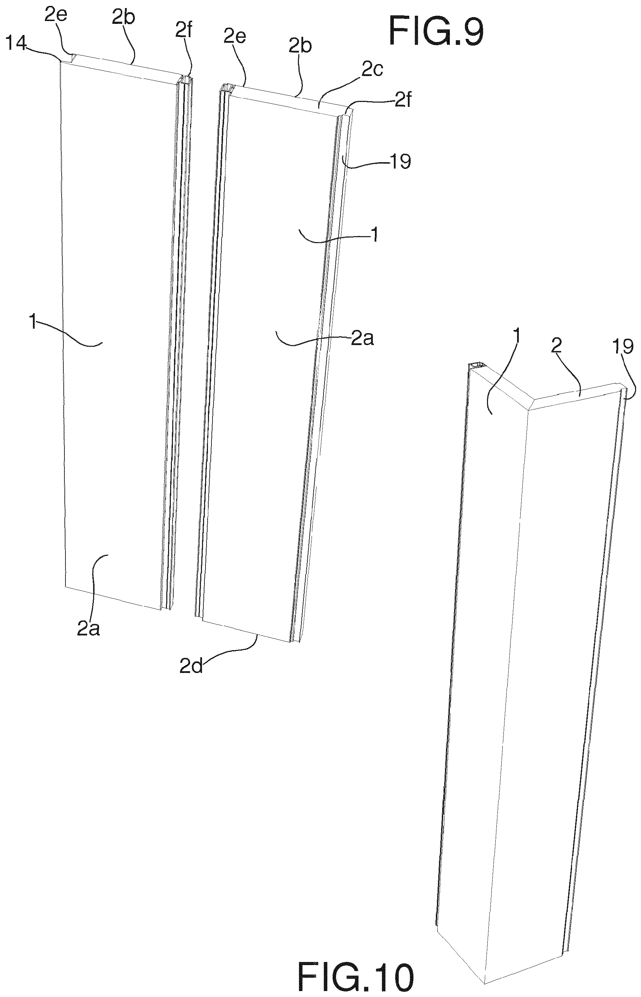

Two portions or halves 18a, 18b of a sandwich panel are thus obtained (see also figure 9), one with a male portion 19 and a first portion, preferably flat 21 to be treated and obtained following cutting and the other with a female portion 14 and a second portion, for example flat 22 to be treated and obtained following cutting.

At this point, at least one profile 5, 6 is constrained (figures 7c-7e), for example as indicated above, at the first portion 21 to be treated of a portion or half of sandwich panel 18a, 18b and at least one profile 5, 6 at the second portion 22 to be treated of the other half of the sandwich panel, thereby obtaining a sandwich panel, with an extension smaller than or equal to half of the initial one, which has a female portion 14 and a male portion obtained thanks to the profile 5, 6 and another sandwich panel, with an extension smaller than or equal to half of the initial one, which has a standard or initial male portion 19 and a male portion obtained thanks to the profile 5, 6. See also figure 9.

Therefore, this method makes it possible to obtain sandwich panels with a size smaller than the standard or initial ones with a specific male portion made up of at least one profile 5, 6 and with another standard female or male portion.

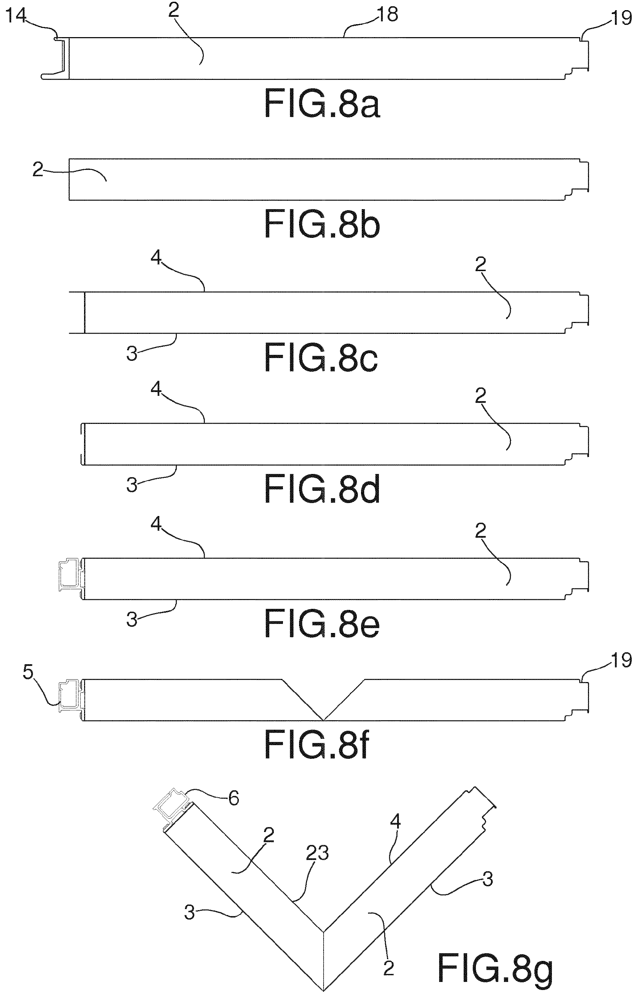

Figure 8a-8g illustrates instead the steps of another method according to the present invention for obtaining a sandwich panel, preferably a corner panel as also shown in figure 10.

This method includes initial steps similar to those described above to obtain a panel according to the present invention with two male portions, initially eliminating (figure 8a) part of the panel at the female portion 14 and then constraining (figures 8b-8e) the profile 5, 6 in the zone to be treated obtained following cutting, thereby obtaining a panel with two male constraining portions.

At this point, if a corner panel is to be obtained, it is possible to make a central cut with the removal of the insulating material and of a sheet (figure 8f) and subsequent folding (figure 8g) so as to bring the thus exposed faces of the insulating material into contact obtaining an L-shaped panel with two lateral or terminal male constraint portions. Of course, after folding it is also advisable to reinforce the panel at the elbow or L-shaped portion, for example by means of at least one special bracket 23 or similar means.

A method for obtaining a panel according to the present invention can be carried out using a special automatic or semi-automatic machine or even manually, although manual obtainment is the least preferred.

With reference to such an aspect, a machine 24 according to the present invention for working sandwich panels with at least two sheets 3, 4 coupled to at least one first layer 2, in preparation of the constrain or connection of at least one profile 5, 6 could for example comprise:
- at least one support frame 25,
- means for defining 26 a plane or zone of support of at least one sandwich panel supported by the support frame 25,
- means for removing 27 part of at least one first main layer or block 2 of support or insulation of a sandwich panel,
- bending means 28a-28d of end portions of two sheets 3, 4 of a sandwich panel following the intervention of the means for removing 27.

The support frame 25 could have any suitable configuration, for example with a plurality of transverse elements 25a and uprights 25b as well as optionally with small feet 25c and the like.

The frame 25 further defines a working zone WZ of the panels, in which zone the ends of the panels 18 to be worked are brought for the removal of insulating 2 and the folding of the cantilever sections 3a, 4a of the sheets 3, 4.

In this regard, the working zone WZ can be a zone, if desired, open upwards and/or downwards, for example delimited on the front or back of the machine 24, in which the removal means 27 and/or the bending means 28 are mounted in a sliding or movable manner.

With regards to the definition means 26, they could include sheets, strips or rollers or a platform or other suitable means for the support and possible sliding of the panels to be treated.

Of course, the height of the definition means 26 can be adjustable or not, if desired by means of telescopic uprights 25b of the frame or with other suitable solutions.

Also provided are means 29 for locking one or more panels in position on the definition means 26, such as for example upper pushers operated manually or automatically, i.e. by a respective actuator.

With reference to the embodiment illustrated in the figures, the locking means 29 are mounted above the support surface or zone and their position can be adjustable in height, if desired by one or more actuators 29a so as to be moved between a height (relative to the support surface) greater than the thickness of the panels and a height substantially corresponding to or slightly less than the thickness of the panels.

With reference to the embodiment shown in the figures, a crosspiece 29b is provided on which or in which one or more actuators or jacks 29a are mounted, for example mechanical jacks with rotating screw, bearing at the bottom the locking means, such as plates or the like, if desired covered with a layer of rubber. Of course, a motor driving the actuators or jacks 29a is also provided, as well as, if desired, one or more load cells designed to detect the force acting on the panel on the definition means and in electrical or electronic communication with the control unit of the motor of the actuators or jacks 29a for an appropriate pushing or pressure action on a panel to be treated.

Alternatively or in addition, stopping or locking means can be provided in a different position or designed to act in a different way, for example horizontally and not vertically as now described.

If desired, the machine 24 can include pushers 30 of one or more panels towards the working zone WZ.

Thus for example, the pushers 30 can be mounted so as to protrude upwards at the surface or support zone, which are suitably motorized so as to slide horizontally and press the panels to be machined from the back towards the working zone WZ.

According to the embodiment illustrated in the figures, the pushers 30 are positioned between the sheets or strips of the definition means 26 and can be of the "hidden" type, that is to say that when they are operated they protrude upwards with respect to the means of definition 26 and can then be operated so as to push the panels towards the working zone WZ, otherwise they do not protrude upwards with respect to the definition means 26.

The frame 24 can also be provided with lateral guide means 31 of the panel, for example rollers, if desired with a vertical axis, placed on a rear side of the panel and, if desired, motorized. Clearly, such means help to guide a panel on the defining means towards the working zone WZ.

Now with regard to the removal means 27, they can include any suitable means, such as for example one or more cutters or better packs of cutters or abrasive rings or discs 27. With reference to this aspect, one, two or more packs of cutters can be provided 27, for example an upper and a lower one, which are suitably powered by motor 32, optionally equipped with an encoder.

The cutters or packs of cutters 27 can be mounted on at least one special carriage 33 (shown several times in the figures to illustrate the various work steps or an example with more trolleys) which, in use, is mounted sliding in the direction (horizontal according to the example in the figures) parallel to the front of a panel to be worked protruding or reaching the working zone WZ, with one working direction and the other returning direction to the initial rest position. The carriage 33 may be motorized or not.

According to the example in the figures, the cutters 27 are mounted with a rotation axis orthogonal to the sliding direction of the carriage 33, if desired with a vertical rotation axis.

Clearly, the pack or packs of cutters 27 must engage or extend (as a whole, therefore considering all the cutters) for a thickness or height equal to that of a treated panel or, better still, of the respective first layer 2 of insulating material. A movement of the cutters in the direction of the thickness or height of the panel could also be considered, but this is a less preferred variant.

If the machine must be designed to process panels with thickness different one with respect to the other, then advantageously, one or both cutters or packs of cutters 27 could be movable towards each other (according to a vertical direction in accordance with the example in the figures) in order to allow adaptation to the thickness of the panels, i.e. a pack of cutters can be moved from the working zone for processing less thick or tall panels and into the working zone for processing thicker or taller panels. Alternatively, one or more cutters or abrasive discs could be added to process thicker or taller panels.

Of course, instead of the cutters, other removal means could be provided, for example means for cutting part of the insulation and then ejecting it or another suitable solution.

If desired, special suction means are also provided, such as suction hoods in association with the removal means 27.

With regard to the bending means 28a-28d, they can have any suitable configuration. With reference to the specific embodiment illustrated in the figures, two series of abutment elements are provided, such as wheels or rollers arranged in sequence and each with an axis at a different inclination with respect to the horizontal, a first series designed to bend a protruding section 3a of one sheet 3 and the other series designed to bend a protruding section 4a of the other sheet 4.

Clearly, the two series of abutment elements are one upper and one lower or in any case they are arranged spaced apart so that the distance between them corresponds, essentially, to the thickness of the panel to be machined.

More specifically, in each series, the wheel 28a which first encounters a panel to be machined or rather the respective sheets 3, 4 in the working direction, has a rotation axis less inclined with respect to the horizontal, for example approximately 20-25°, and thus one, two, three 28b, 28c or more increasingly inclined wheels are envisaged, if desired one with a rotation axis inclined by approximately 40-50° with respect to the horizontal and then one with a rotation axis inclined by approximately 65- 75° with respect to the horizontal up to the last 28d which has an axis, for example substantially vertical and which carries out the final bending of the protruding sections 3a, 4a of the sheets 3, 4.

Therefore, this structure involves a progressive bending of the protruding sections 3a, 4a of the sheet 3, 4.

If desired, the bending means 28a-28d are mounted on the carriage 33, in particular in a position downstream (with reference to the working direction) of the removal means 27, so that the bending means 28a-28d act after the removal means 27 or better yet on portions of a panel already treated by the removal means 27.

Advantageously, the bending means 28a-28d include threaded pin wheels with a folding knife for making the folds.

Furthermore, a stop element 34 can also be provided, mounted downstream (with reference to the working direction) of the bending means 28a-28d and designed to avoid excessive folding of the protruding sections by the bending means 28a-28d.

The bending means 28a-28d and, if provided, the stop element 34 are mounted on the same support component, optionally integral with or fixed or connected to at least one carriage 33.

With specific reference to the non-limiting embodiment illustrated in the figures, the frame 25 includes the working zone WZ at the front and the panel support area at the rear delimited by the definition means 26, so that the end to be machined of the panels protrudes at least part or in any case reaches the working zone WZ.

The frame 25 can also have a front beam or profile 35 which protrudes into or frontally delimits the working zone WZ and on which the carriage 33 carrying the removal means 27 and, if desired, the bending means 28a-28d is mounted.

The beam or front profile 35 preferably has a main extension dimension which is horizontal.

Clearly, a specific sliding engagement is provided, for example with at least one skid 36 and at least one slide 37 between the carriage 33 and the beam or front profile 35.

With such a machine 24, a panel to be machined 18 is mounted on the definition means 26 and, then, possibly by means of the pushers 30, the panel 18 is brought with its end to be machined into the working zone WZ.

At this point the blocking means 29 are activated, blocking the panel 18 in position and then the sliding of the carriage 33 is controlled which drags with it the removal means 27 and, subsequently, the bending means 28, which therefore removes part of the insulating layer 2 and bend the resulting protruding sections 3a, 4a of the sheet 3, 4.

Subsequently, the profile 5, 6 must be secured to the thus treated panel, inserting the clamping or constraint means 8 manually or using a specific component of the machine.

Clearly, such a machine is preferably automatic with an electronic control unit responsible for controlling the various components.

As it will be appreciated, a panel according to the present invention is, essentially, a structural coupling/male-female coupling, for sandwich panels with an oversized width, such as to guarantee the thermal break between adjacent panels.

With regard to this aspect, thanks to the present invention it is possible to obtain an adaptation, even micrometric, of the pitch of the sandwich panels. In relation to this aspect, the panels according to the present invention can be sectioned longitudinally to the desired size, so that it is possible to perfectly adapt the panels to the desired use, thereby allowing an appropriate completion on site of "dry" facades with sandwich panels.

Furthermore, thanks in particular to the panels according to the present invention with two male portions (one standard and the other obtained owing to profile 5, 6) it is possible to "reverse" the installation of the panels. In relation to this aspect, in the architectural field, especially when carrying out energy redevelopment operations on existing buildings, there is a need not only to adapt to the architectural forms (windows, balconies, doors, openings, pilasters, etc.), but also the need to vary the installation sequence. It is therefore necessary to have a panel that has double male to reverse the direction of installation of the row of panels on the facade. The present invention responds to this need by allowing the reconstruction of a panel with a double male/male coupling.

Furthermore, since the only contact element between adjacent panels is constituted by at least one profile 5, considering that this is made of polymeric material, for example ABS, PVC, Nylon, methacrylate, pultruded fiberglass, composite polymers in general, or similar materials, the perfect thermal cut of the structural graft is ensured. In fact, the joint in polymer or similar materials, as designed, allows the mechanical seal of the new joint compatible with the standard joints of existing sandwich panels, but, in addition, it also achieves the objective of interrupting the transmission of heat from the external to internal (and vice versa) helping to avoid nullifying the performance of the original panel once cut.

Furthermore, if two profiles are provided, it is possible to provide a so-called "master" part made up of the first profile, which is universal across the entire range of sandwich panels which can be coupled to a "variable" part, made up of the second profile 6, which is instead specific for each type of panel joint and can be varied from time to time.

Modifications and variations of the invention are possible within the scope defined by the claims.

## Claims

1. Sandwich panel for cladding or covering roofs or for obtaining of walls, comprising:
- at least one first main layer or block (2) of support or insulation comprising two faces (2a, 2b) with main extension parallel to each other, and edge faces with lower extension including a front face (2c), a rear face (2d) parallel to said front face as well as two lateral faces (2e, 2f),
- at least one first sheet (3) applied or adhered to a first main extension face (2a) of said first main support layer (2),
- at least one second sheet (4) applied or adhered to the other or second main extension face (2b) of said first main support layer (2),
said panel comprising at least one profile (5, 6) constrained to one or at a lateral face (2e, 2f) of said first layer (2) so as to constitute a male portion of constraint or connection or engagement of said sandwich panel with a female portion of an adjacent sandwich panel,
wherein said panel comprises means (8) for clamping or constraining said at least one profile (5) to said at least one first (3) and/or second (4) sheet and/or to said first layer (2), said means (8) for clamping or constraining comprising one or more screws, bolts and/or rivets (8).

2. Panel according to claim 1, wherein said at least one profile comprises a first profile (5) with a base section (5a) constrained to said first layer (2) and a cantilever section (5b).

3. Panel according to claim 2, wherein said cantilevered section comprises a first wall (5c) projecting from said base section (5a) in the direction away from said first layer (2) and a second wall (5d) projecting from said first wall (5c) with a trim inclined or orthogonal to the latter and at a distance from said base section (5a).

4. Panel according to any one of the preceding claims, wherein said first and said second sheet have a section (3a, 4a) protruding laterally with respect to the first layer (2) and folded onto or towards the latter at the lateral face (2e, 2f) of constraint of said at least one profile (5, 6), and wherein the ends of said at least one profile (5) are clamped or constrained by said one or more screws, bolts and/or rivets (8) to the protruding sections (3a, 4a) of said first (3) and second (4) sheet or between the protruding sections (3a, 4a) of said first (3) and second (4) sheet and the respective lateral face (2e, 2f) of said first layer (2).

5. Panel according to any one of the preceding claims when depending on claim 2, wherein said at least one profile comprises at least one second profile (6) connected to said first profile (5) and defining with it a male constraint or connection or engagement portion of the panel with a female portion of panels, in use, adjacent and juxtaposed to it.

6. Panel according to claims 3 and 5, wherein said at least one second profile (6) is arranged within the seat (SE) defined between said second wall (5d) of said cantilevered section (5b) and said base section (5a).

7. Panel according to claim 5 or 6, wherein said at least one second profile (6) has a tubular configuration with a regular or irregular section.

8. Panel according to claim 5, 6 or 7, comprising one or more screws (13b) which pass through respective portions of said at least one first (5) and said at least one second (6) profile, making them integral with one another.

9. Panel according to any one of the preceding claims, wherein the lateral face (2f) of said at least one first layer or main block (2) which is distal from said at least one profile (5, 6) defines a male portion (19) of connection with a female portion of adjacent panels.

10. Panel according to any one of the claims from 1 to 9, wherein the lateral face (2f) of said at least one first layer or main block (2) which is distal from said at least one profile (5, 6) defines a female portion (14) of connection with configuration substantially complementary to said at least one profile (5, 6).

11. Panel according to any one of the preceding claims, wherein said at least one profile (5) is made of a polymeric material.

12. Panel according to any one of the preceding claims, wherein said at least one profile (5, 6) extends substantially along the entire extension of the respective lateral face (2e), and thus from the front face (2c) to the rear face of the first layer (2).

13. Facade or wall comprising at least one first panel according to any one of the preceding claims and at least one other or second sandwich panel, wherein said male constraint or connection portion made by said at least one profile (5, 6) is inserted and constrained in a female portion (14) of said other sandwich panel, so that the sole contact element of said at least one first panel with said other or second panel consists of said at least one profile (5, 6).

14. Facade according to claim 13, wherein said at least one first panel includes one or more screws (13a) for connecting to a substructure, said one or more screws pass through said at least one profile (5, 6).

15. Facade according to claim 14, wherein said one or more connecting screws (13a) extend in a direction parallel to the direction from one main extension face (2a) to the other (2b).

16. Facade according to claim 14 or 15, wherein said female portion (14) of said other sandwich panel comprises a U- or C-shaped configuration, with the two cantilevered lateral section (14a, 14b) with equal or different dimensions,
wherein said cantilevered lateral section (14a) of said female portion (14) hides said one or more connection screws (13a) on the outside.

17. Method for obtaining a panel according to any one of claims 1 to 12, comprising the following steps:
- obtaining a sandwich panel with said at least one first layer or main block (2) of support or insulation and two sheets (3, 4) each applied on a main extension face (2a, 2b) of said at least one first main layer or block (2),
- constraining said at least one profile (5, 6) to said at least one first (3) and/or second (4) layer and/or on a lateral face (2e) of said first layer (2) by means of said one or more screws, bolts and/or rivets (8).

18. Method according to claim 17, wherein said constraining step comprises the following sub-steps:
- remove part of said at least one first layer (2) at one side, so as to obtain that said first (3) and second sheet (4) have a section (3a, 4a) protruding laterally with respect to the first block (2),
- bend said protruding portions (3a, 4) towards the lateral face (2e) of constraint of said at least one profile (5, 6),
- before or after said bending step, arrange said at least one profile (5) close to the lateral face (2e) of said first layer (2), so that after the bending step, respective portions (5a2, 5a3) of said at least one profile (5) are between said protruding portions (3a, 4a) and the lateral face (2e) of the first layer,
- apply the clamping or constraining means (8), so that ends or portions (5a2, 5a3) of said at least profile (5) are clamped or constrained by said one or more screws, bolts and/or rivets (8) to the protruding sections (3a, 4a) of said first (3) and second (4) sheet or between the protruding sections (3a, 4a) of said first (3) and second (4) sheet and the respective lateral face (2e) of said first block (2).

19. Method for obtaining two sandwich panels, wherein, starting from a sandwich panel (18) with a male portion (19) at one side or flank and a female portion (14) at the other side or flank, the following steps are performed:
- apply a cut at an intermediate portion of the panel and in a plane where lies the direction from one main extension face (2a) to the other (2b) and the direction from the front face (2c) to the rear face (2d), so as to obtain two parts (18a, 18b) of a sandwich panel, one part with a male portion (19) and a first portion (21) to be treated which has been obtained owing to the cutting step and the other part with a female portion (14) and a second portion (22) to be treated which has been obtained owing to the cutting step,
- constrain, by executing all the steps of a method according to claim 17 or 18, at least one profile (5, 6) at the first portion (21) to be treated of a part of the sandwich panel and at least one profile (5, 6) at the second portion (22) to be treated of the other part of the sandwich panel, thereby obtaining a sandwich panel, with an extension smaller than the initial one, which has a female portion (14) and a male portion obtained thanks to the profile (5, 6) and another sandwich panel, with an extension smaller than the initial one, which has an initial male portion (19) and a male portion obtained thanks to the profile (5, 6).

## Patentansprüche

1. Sandwichpaneel zur Verkleidung oder Abdeckung von Dächern oder zur Erhaltung von Wänden, umfassend:
- mindestens eine erste Hauptschicht oder einen ersten Hauptblock (2) zum Tragen oder Isolieren, umfassend zwei Flächen (2a, 2b) mit einer Haupterstreckung parallel zueinander und Randflächen mit einer geringeren Erstreckung, die eine vordere Fläche (2c), eine hintere Fläche (2d) parallel zu der besagten vorderen Fläche sowie zwei seitliche Flächen (2e, 2f) beinhalten,
- mindestens eine erstes Platte (3), die auf einer ersten Haupterstreckungsfläche (2a) der besagten ersten Haupttragschicht (2) aufgebracht oder angehaftet ist,
- mindestens eine zweite Platte (4), die auf der anderen oder zweiten Haupterstreckungsfläche (2b) der besagten ersten Haupttragschicht (2) aufgebracht oder angehaftet ist,
- wobei das besagte Paneel mindestens ein Profil (5, 6) umfasst, das auf einer oder an einer seitlichen Fläche (2e, 2f) der besagten ersten Schicht (2) befestigt ist, um einen männlichen Abschnitt zum Befestigen oder Verbinden oder Eingreifen des besagten Sandwichpaneels mit einem weiblichen Abschnitt eines angrenzenden Sandwichpaneels zu bilden,
worin das besagte Paneel Mittel (8) zum Einspannen oder Befestigen des besagten mindestens einen Profils (5) an der besagten mindestens einen ersten (3) und/oder zweiten (4) Platte und/oder an der besagten ersten Schicht (2) umfasst, wobei die besagten Mittel (8) zum Einspannen oder Befestigen eine oder mehrere Schrauben, Bolzen und/oder Nieten (8) umfassen.

2. Paneel nach Anspruch 1, worin das besagte mindestens eine Profil ein erstes Profil (5) mit einem Basisbereich (5a), der an der besagten ersten Schicht (2) befestigt ist, und einem Auskragungsbereich (5b) umfasst.

3. Paneel nach Anspruch 2, worin der besagte auskragende Bereich eine erste Wand (5c), die von dem besagten Basisbereich (5a) in der Richtung weg von der besagten ersten Schicht (2) vorsteht, und eine zweite Wand (5d), die von der besagten ersten Wand (5c) mit einer Trimmung schräg oder orthogonal zu letzterer und in einem Abstand von dem besagten Basisbereich (5a) vorsteht, umfasst.

4. Paneel nach irgendeinem der vorangegangenen Ansprüche, worin die besagte erste und die besagte zweite Platte einen Bereich (3a, 4a) aufweisen, der seitlich in Bezug auf die erste Schicht (2) vorsteht und auf oder zu letzterer hin an der seitlichen Fläche (2e, 2f) zur Befestigung des besagten mindestens einen Profils (5, 6) gefaltet ist, und worin die Enden des besagten mindestens einen Profils (5) durch die besagte eine oder die besagten mehreren Schrauben, Bolzen und/oder Nieten (8) auf den vorstehenden Bereichen (3a, 4a) der besagten ersten (3) und zweiten (4) Platte oder zwischen den vorstehenden Bereichen (3a, 4a) der besagten ersten (3) und zweiten (4) Platte und der jeweiligen seitlichen Fläche (2e, 2f) der besagten ersten Schicht (2) eingespannt oder befestigt sind.

5. Paneel nach irgendeinem der vorangegangenen Ansprüche, wenn abhängig von Anspruch 2, worin das besagte mindestens eine Profil mindestens ein zweites Profil (6) umfasst, das mit dem besagten ersten Profil (5) verbunden ist und mit ihm einen männlichen Befestigungs- oder Verbindungs- oder Eingriffsabschnitt des Paneels mit einem weiblichen Abschnitt von Paneelen, die im Gebrauch angrenzend und nebeneinander dazu gestellt sind, definiert.

6. Paneel nach den Ansprüchen 3 und 5, worin das besagte mindestens eine zweite Profil (6) innerhalb des Sitzes (SE), der zwischen der besagten zweiten Wand (5d) des besagten auskragenden Bereichs (5b) und dem besagten Basisbereich (5a) definiert ist, angeordnet ist.

7. Paneel nach Anspruch 5 oder 6, worin das besagte mindestens eine zweite Profil (6) eine rohrförmige Konfiguration mit einem regelmäßigen oder unregelmäßigen Bereich aufweist.

8. Paneel nach Anspruch 5, 6 oder 7, umfassend eine oder mehrere Schrauben (13b), die durch jeweilige Abschnitte des besagten mindestens einen ersten (5) und des besagten mindestens einen zweiten (6) Profils hindurchgehen und sie einstückig miteinander machen.

9. Paneel nach irgendeinem der vorangegangenen Ansprüche, worin die seitliche Fläche (2f) der besagten mindestens einen ersten Schicht oder des besagten Hauptblocks (2), die von dem besagten mindestens einen Profil (5, 6) distal ist, einen männlichen Abschnitt (19) zur Verbindung mit einem weiblichen Abschnitt angrenzender Paneele definiert.

10. Paneel nach irgendeinem der Ansprüche 1 bis 9, worin die seitliche Fläche (2f) der besagten mindestens einen ersten Schicht oder des Hauptblocks (2), die/der von dem besagten mindestens einen Profil (5, 6) distal ist, einen weiblichen Abschnitt (14) zur Verbindung mit einer Konfiguration definiert, die im Wesentlichen komplementär zu dem besagten mindestens einen Profil (5, 6) ist.

11. Paneel nach irgendeinem der vorangegangenen Ansprüche, worin das besagte mindestens eine Profil (5) aus einem polymeren Material besteht.

12. Paneel nach irgendeinem der vorangegangenen Ansprüche, worin sich das besagte mindestens eine Profil (5, 6) im Wesentlichen entlang der gesamte Erstreckung der jeweiligen seitlichen Fläche (2e) und damit von der vorderen Fläche (2c) bis zur hinteren Fläche der ersten Schicht (2) erstreckt.

13. Fassade oder Wand, umfassend mindestens ein erstes Paneel nach irgendeinem der vorangegangenen Ansprüche und mindestens ein anderes oder zweites Sandwichpaneel, worin der besagte männliche Befestigungs- oder Verbindungsabschnitt, der durch das besagte mindestens eine Profil (5, 6) gebildet ist, in einem weiblichen Abschnitt (14) des besagten anderen Sandwichpaneels eingesetzt und befestigt ist, so dass das einzige Kontaktelement des besagten mindestens einen ersten Paneels mit dem besagten anderen oder zweiten Paneel aus dem besagten mindestens einen Profil (5, 6) besteht.

14. Fassade nach Anspruch 13, worin das besagte mindestens eine erste Paneel eine oder mehrere Schrauben (13a) zur Verbindung mit einer Unterkonstruktion beinhaltet, wobei die besagte eine oder die besagten mehreren Schrauben durch das besagte mindestens eine Profil (5, 6) hindurchgehen.

15. Fassade nach Anspruch 14, worin sich die besagte eine oder die besagten mehreren Verbindungsschrauben (13a) in eine Richtung parallel zur Richtung von einer Haupterstreckungsfläche (2a) zur anderen (2b) erstrecken.

16. Fassade nach Anspruch 14 oder 15, worin der besagte weibliche Abschnitt (14) des besagten anderen Sandwichpaneels eine U- oder C-förmige Konfiguration umfasst, wobei die zwei auskragenden seitlichen Bereiche (14a, 14b) gleiche oder unterschiedliche Abmessungen aufweisen,
worin der besagte auskragende seitliche Bereich (14a) des besagten weiblichen Abschnitts (14) die besagte eine oder die besagten mehreren Verbindungsschrauben (13a) auf der Außenseite verdeckt.

17. Verfahren zur Erhaltung eines Paneels nach irgendeinem der Ansprüche 1 bis 12, umfassend die folgenden Schritte:
- Erhalten eines Sandwichpaneels mit der besagten mindestens einen ersten Schicht oder dem besagten mindestens einen Hauptblock (2) zum Tragen oder Isolieren und zwei Platten (3, 4), die jeweils auf einer Haupterstreckungsfläche (2a, 2b) der besagten mindestens einen ersten Hauptschicht oder des besagten mindestens einen ersten Blocks (2) aufgebracht sind,
- Befestigen des besagten mindestens einen Profils (5, 6) an der besagten mindestens einen ersten (3) und/oder zweiten (4) Schicht und/oder an einer seitlichen Fläche (2e) der besagten ersten Schicht (2) mittels der besagten einen oder der besagten mehreren Schrauben, Bolzen und/oder Nieten (8).

18. Verfahren nach Anspruch 17, worin der besagte Befestigungsschritt die folgenden Unterschritte umfasst:
- Entfernen eines Teils der besagten mindestens einen ersten Schicht (2) an einer Seite, um zu erreichen, dass die besagte erste (3) und zweite Platte (4) einen Bereich (3a, 4a) aufweisen, der in Bezug auf den ersten Block (2) seitlich vorsteht,
- Biegen der besagten vorstehenden Abschnitte (3a, 4) zu der seitlichen Fläche (2e) zur Befestigung des besagten mindestens einen Profils (5, 6) hin,
- vor oder nach dem besagten Biegeschritt, Anordnen des besagten mindestens einen Profils (5) nahe der seitlichen Fläche (2e) der besagten ersten Schicht (2), so dass nach dem Biegeschritt jeweilige Abschnitte (5a2, 5a3) des besagten mindestens einen Profils (5) zwischen den besagten vorstehenden Abschnitten (3a, 4a) und der seitlichen Fläche (2e) der ersten Schicht liegen,
- Aufbringen der Einspann- oder Befestigungsmittel (8), so dass Enden oder Abschnitte (5a2, 5a3) des besagten mindestens einen Profils (5) durch die besagte eine oder die besagten mehreren Schrauben, Bolzen und/oder Nieten (8) an den vorstehenden Bereichen (3a, 4a) der besagten ersten (3) und zweiten (4) Platte oder zwischen den vorstehenden Bereichen (3a, 4a) der besagten ersten (3) und zweiten (4) Platte und der jeweiligen seitlichen Fläche (2e) des besagten ersten Blocks (2) eingespannt oder befestigt sind.

19. Verfahren zur Erhaltung von zwei Sandwichpaneelen, worin, ausgehend von einem Sandwichpaneel (18) mit einem männlichen Abschnitt (19) an einer Seite oder Flanke und einem weiblichen Abschnitt (14) an der anderen Seite oder Flanke, die folgenden Schritte durchgeführt werden:
- Aufbringen eines Schnitts an einem Zwischenabschnitt des Paneels und in einer Ebene, in der die Richtung von einer Haupterstreckungsfläche (2a) zur anderen (2b) und die Richtung von der vorderen Fläche (2c) zur hinteren Fläche (2d) liegt, so dass zwei Teile (18a, 18b) eines Sandwichpaneels erhalten werden, ein Teil mit einem männlichen Abschnitt (19) und einem ersten zu behandelnden Abschnitt (21), der aufgrund des Schneideschritts erhalten wurde, und der andere Teil mit einem weiblichen Abschnitt (14) und einem zweiten zu behandelnden Abschnitt (22), der aufgrund des Schneideschritts erhalten wurde,
- Befestigen, durch Ausführen aller Schritte eines Verfahrens nach Anspruch 17 oder 18, mindestens eines Profils (5, 6) an dem ersten zu behandelnden Abschnitt (21) eines Teils des Sandwichpaneels und mindestens eines Profils (5, 6) an dem zweiten zu behandelnden Abschnitt (22) des anderen Teils des Sandwichpaneels, wodurch ein Sandwichpaneel erhalten wird, mit einer geringeren Erstreckung als die anfängliche, das einen weiblichen Abschnitt (14) und einen männlichen Abschnitt aufweist, erhalten dank des Profils (5, 6) und eines anderen Sandwichpaneels, mit einer geringeren Erstreckung als die anfängliche, das einen anfänglichen männlichen Abschnitt (19) und einen männlichen Abschnitt aufweist, der dank des Profils (5, 6) erhalten wird.

## Revendications

1. Panneau sandwich pour le revêtement ou le recouvrement des toits ou pour l'obtention de murs, comprenant :
- au moins une première couche principale ou un bloc (2) de support ou d'isolation comprenant deux faces (2a, 2b) avec une extension principale parallèles l'une à l'autre, et des faces d'arête avec une extension inférieure incluant une face avant (2c), une face arrière (2d) parallèle à ladite face avant ainsi que deux faces latérales (2e, 2f),
- au moins une première feuille (3) appliquée ou collée sur une première face d'extension principale (2a) de ladite première couche principale de support (2),
- au moins une deuxième feuille (4) appliquée ou collée à l'autre ou à la deuxième face d'extension principale (2b) de ladite première couche principale de support (2),
- ledit panneau comprenant au moins un profil (5, 6) contraint à une ou à une face latérale (2e, 2f) de ladite première couche (2) de façon à constituer une portion mâle de contrainte ou de raccordement ou d'engagement dudit panneau sandwich avec une portion femelle d'un panneau sandwich adjacent,
dans lequel ledit panneau comprend des moyens (8) pour serrer ou contraindre ledit au moins un profil (5) à ladite au moins une première (3) et/ou deuxième (4) feuille et/ou à ladite première couche (2), lesdits moyens (8) pour serrer ou contraindre comprenant une ou plusieurs vis, boulons et/ou rivets (8).

2. Panneau selon la revendication 1, dans lequel ledit au moins un profil comprend un premier profil (5) avec une section de base (5a) contrainte à ladite première couche (2) et une section en porte-à-faux (5b).

3. Panneau selon la revendication 2, dans lequel ladite section en porte-à-faux comprend une première paroi (5c) dépassant de ladite section de base (5a) dans la direction opposée à ladite première couche (2) et une deuxième paroi (5d) dépassant de ladite première couche (5c) avec une coupe inclinée ou orthogonale à cette dernière et à distance de ladite section de base (5a).

4. Panneau selon l'une quelconque des revendications précédentes, dans lequel ladite première et ladite deuxième feuille ont une section (3a, 4a) saillant latéralement par rapport à la première couche (2) et repliée sur ou vers cette dernière à la face latérale (2e, 2f) de contrainte dudit au moins un profil (5, 6), et dans lequel les extrémités dudit au moins un profil (5) sont fixées ou contraintes par lesdits une ou plusieurs vis, boulons et/ou rivets (8) sur les sections saillantes (3a, 4a) de ladite première (3) et ladite deuxième (4) feuille ou entre les sections saillantes (3a, 4a) de ladite première (3) et ladite deuxième (4) feuille et la face latérale respective (2e, 2f) de ladite première couche (2).

5. Panneau selon l'une quelconque des revendications précédentes lorsqu'elle dépend de la revendication 2, dans lequel ledit au moins un profil comprend au moins un deuxième profil (6) raccordé audit premier profil (5) et définissant avec lui une portion mâle de contrainte ou de raccordement ou d'engagement du panneau avec une portion femelle de panneaux, en usage, adjacents et juxtaposés à celui-ci.

6. Panneau selon les revendications 3 et 5, dans lequel ledit au moins un deuxième profil (6) est disposé à l'intérieur du siège (SE) défini entre ladite deuxième paroi (5d) de ladite section en porte-à-faux (5b) et ladite section de base (5a).

7. Panneau selon la revendication 5 ou 6, dans lequel ledit au moins un deuxième profil (6) a une configuration tubulaire avec une section régulière ou irrégulière.

8. Panneau selon la revendication 5, 6 ou 7, comprenant une ou plusieurs vis (13b) qui traversent les portions respectives dudit au moins un premier (5) et dudit au moins un deuxième (6) profil, les rendant intégraux les uns aux autres.

9. Panneau selon l'une quelconque des revendications précédentes, dans lequel la face latérale (2f) de ladite au moins une première couche ou bloc principal (2), qui est distale par rapport audit au moins un profil (5, 6), définit une portion mâle (19) de raccordement avec une portion femelle des panneaux adjacents.

10. Panneau selon l'une quelconque des revendications 1 à 9, dans lequel la face latérale (2f) de ladite au moins une première couche ou bloc principal (2), qui est distale par rapport audit au moins un profil (5, 6), définit une portion femelle (14) de raccordement avec une configuration sensiblement complémentaire audit au moins un profil (5, 6).

11. Panneau selon l'une quelconque des revendications précédentes, dans lequel ledit au moins un profil (5) est fabriqué dans un matériau polymère.

12. Panneau selon l'une quelconque des revendications précédentes, dans lequel ledit au moins un profil (5, 6) s'étend sensiblement sur toute l'extension de la face latérale respective (2e), et donc de la face avant (2c) jusqu'à la face arrière de la première couche (2).

13. Façade ou paroi comprenant au moins un premier panneau selon l'une quelconque des revendications précédentes et au moins un autre ou deuxième panneau sandwich, dans lequel ladite portion de contrainte ou de raccordement mâle faite par ledit au moins un profil (5, 6) est insérée et contrainte dans une portion femelle (14) dudit autre panneau sandwich, de sorte que le seul élément de contact dudit au moins un premier panneau avec ledit autre ou deuxième panneau est constitué dudit au moins un profil (5, 6).

14. Façade selon la revendication 13, dans laquelle ledit au moins un premier panneau comprend une ou plusieurs vis (13a) pour le raccordement à une sous-structure, lesdites une ou plusieurs vis traversant ledit au moins un profil (5, 6).

15. Façade selon la revendication 14, dans laquelle une ou plusieurs vis de raccordement (13a) s'étendent dans une direction parallèle à la direction d'une face principale d'extension (2a) à l'autre (2b).

16. Façade selon la revendication 14 ou 15, dans laquelle ladite portion femelle (14) dudit autre panneau sandwich comprend une configuration en U ou en C, les deux sections latérales en porte-à-faux (14a, 14b) ayant des dimensions égales ou différentes,
dans laquelle ladite section latérale en porte-à-faux (14a) de ladite portion femelle (14) dissimule lesdites une ou plusieurs vis de raccordement (13a) à l'extérieur.

17. Procédé pour obtenir un panneau selon l'une quelconque des revendications 1 à 12, comprenant les étapes suivantes :
- obtenir un panneau sandwich avec ladite au moins une première couche ou bloc principal (2) de support ou d'isolation et deux feuilles (3, 4) chacune appliquée sur une face d'extension principale (2a, 2b) de ladite au moins une première couche ou bloc principal (2),
- contraindre ledit au moins un profil (5, 6) à ladite au moins une première (3) et/ou deuxième (4) couche et/ou sur une face latérale (2e) de ladite première couche (2) au moyen d'une ou plusieurs vis, boulons et/ou rivets (8).

18. Procédé selon la revendication 17, dans lequel ladite étape de contrainte comprend les sous-étapes suivantes :
- retirer une partie de ladite au moins une première couche (2) d'un côté, de sorte que ladite première (3) et deuxième (4) feuille aient une section (3a, 4a) saillant latéralement par rapport au premier bloc (2),
- plier lesdites portions saillantes (3a, 4) vers la face latérale (2e) de contrainte dudit au moins un profil (5, 6),
- avant ou après ladite étape de pliage, disposer ledit au moins un profil (5) près de la face latérale (2e) de ladite première couche (2), de sorte qu'après l'étape de pliage, les portions respectives (5a2, 5a3) dudit au moins un profil (5) se situent entre les portions saillantes (3a, 4a) et la face latérale (2e) de la première couche,
- appliquer le moyen de serrage ou de contrainte (8) de sorte que les extrémités ou portions (5a2, 5a3) dudit au moins un profil (5) soient serrées ou contraintes par lesdites une ou plusieurs vis, boulons et/ou rivets (8) sur les sections saillantes (3a, 4a) desdites première (3) et deuxième (4) feuilles ou entre les sections saillantes (3a, 4a) desdites première (3) et deuxième (4) feuilles et la face latérale (2e) respective dudit premier bloc (2).

19. Procédé pour obtenir deux panneaux sandwich, dans lequel, en partant d'un panneau sandwich (18) avec une portion mâle (19) d'un côté ou flanc et une portion femelle (14) de l'autre côté ou flanc, les étapes suivantes sont réalisées :
- appliquer une découpe à une portion intermédiaire du panneau et dans un plan dans lequel se trouve la direction depuis une face d'extension principale (2a) à l'autre (2b) et la direction depuis la face avant (2c) à la face arrière (2d), afin d'obtenir deux parties (18a, 18b) d'un panneau sandwich, une partie avec une portion mâle (19) et une première portion (21) à traiter qui a été obtenue grâce à l'étape de coupe et l'autre partie avec une portion femelle (14) et une deuxième portion (22) à traiter qui a été obtenue grâce à l'étape de coupe,
- contraindre, en exécutant toutes les étapes d'un procédé selon la revendication 17 ou 18, au moins un profil (5, 6) à la première portion (21) à traiter d'une partie du panneau sandwich et au moins un profil (5, 6) à la deuxième portion (22) à traiter de l'autre partie du panneau sandwich, obtenant ainsi un panneau sandwich, avec une extension plus petite que l'initiale, qui possède une portion femelle (14) et une portion mâle obtenues grâce au profil (5, 6) et un autre panneau sandwich, avec une extension plus petite que l'initiale, qui possède une portion mâle initiale (19) et une portion mâle obtenue grâce au profil (5, 6) .
